# EUROPEAN PATENT SPECIFICATION

(11) **EP 2 148 824 B1**
(45) Date of publication and mention of the grant of the patent: **21.11.2018**
(21) Application number: 07835072.5
(22) Date of filing: 02.10.2007
(51) Int. Cl.: B65D 65/40, B32B 27/16, C08J 7/04, B32B 37/15, B32B 7/12, C09D 179/02

(54) **A PACKAGING LAMINATE AND A METHOD OF PRODUCING THE PACKAGING LAMINATE**
VERPACKUNGSLAMINAT UND VERFAHREN ZUR HERSTELLUNG DES VERPACKUNGSLAMINATS
STRATIFIÉ D'EMBALLAGE ET PROCÉDÉ DE PRODUCTION DU STRATIFIÉ D'EMBALLAGE

(30) Priority: 21.12.2006 SE 0602788
(43) Date of publication of application: 03.02.2010
(73) Proprietor: Tetra Laval Holdings & Finance S.A., 1009 Pully (CH)
(72) Inventor: LETH, Ib, 273 64 Kävlinge (SE)
(74) Representative: Tetra Pak - Patent Attorneys SE
(86) International application number: PCT/SE2007/000870
(87) International publication number: WO 2008/076033

(56) References cited:
- EP-A1- 1 464 481
- EP-A1- 1 464 481
- WO-A1-00/49072
- WO-A1-98/34786
- WO-A1-03/062321
- WO-A2-2006/113561
- JP-A- 2001 164 174
- JP-A- 2002 240 207
- US-A1- 2001 005 550
- US-A1- 2002 169 253
- US-A1- 2004 023 045

## Description

### Technical field

The present invention relates to a packaging laminate for a packaging container, the packaging laminate comprising a core layer which, on both sides, has outer, liquid-tight coatings of plastic and which, between the core layer and one of the two outer liquid-tight plastic coatings, has a polymer film serving as gas barrier, which is laminated to the core layer by means of a lamination layer of polypropylene, and between the polymer film serving as a gas barrier, and the core layer, having a layer serving as a supplementary gas barrier, wherein the polymer film serving as a gas barrier is a film selected from the group comprising polyester (PET), amorphous polyester (APET), polyamide (PA), amorphous polyamide (APA), liquid crystalline polymers (LCP), cyclic olefin copolymers (COC), ethylene vinyl alcohol (EVOH), polyvinyl alcohol (PVOH), and films of said polymers with a coating of inorganic material or of organic material. In particular, the present invention relates to such a packaging laminate for a retortable packaging container for a food which, after storage and still packed in the packaging container, may be heated in a microwave oven without the need of first opening the packaging container.

The present invention moreover relates to a packaging container, produced from the packaging laminate, for a food which, after storage and still packed in the packaging container, may be heated therein using microwaves without the need of first opening the packaging container.

Packaging laminates, as well as packaging containers of the above-described type are previously known in the art from, for example, WO 9702140, published on 23 January 1997, WO 9702139, published on 23 January 1997, WO 9702181, published on 23 January 1997, WO 9702142, published on 23 January 1997, WO 0222462, published on 21 March 2002, WO 0228637, published on 11 April 2002, WO 03035503, published on 1 May 2003, and WO 9816431, published on 23 April 1998.

### Background art

A prior art packaging laminate which is described in, for example, above mentioned WO 9702140, has a core layer of paper or paperboard and outer, liquid-tight coatings of plastic, e.g. polypropylene (PP), on both sides of the core layer. Between the core layer and one of the two outer, liquid-tight plastic coatings, the packaging laminate has a layer possessing tightness properties against gases, in particular oxygen gas. The gas barrier layer is preferably an aluminium foil (Alifoil) by means of which retortable packaging containers may be produced rapidly and efficiently by thermosealing (IH sealing) during the reforming of the packaging laminate into packaging containers.

US patent application No. 2004/023045, corresponding to international patent application WO02/28637, relates to a similar packaging laminate to above, wherein the gas barrier layer is laminated to the core layer by an intermediate bonding layer of a polypropylene having a high melting point, for better performance in connection to retort sterilisation conditions.

One drawback in this, and also in other prior art packaging laminates which include an aluminium foil as gas barrier, is that an aluminium foil has a very high E-modulus and therefore practically complete lacks extensibility, with the result that cracks and similar untightness readily occur in the foil when the packaging laminate is reformed by fold forming.

In order to avoid or counteract reduced barrier properties because of such crack formations in the aluminium foil, the above-mentioned prior art packaging laminates are therefore supplemented with at least one additional gas barrier layer, which is described, for example, in WO 03035503. Such a supplementary gas barrier layer may be a film of ethylene vinyl alcohol (EVOH) or polyamide (PA) which are not as sensitive to tensile stress and do not readily crack as an aluminium foil and can, therefore, withstand powerful tensile stresses to which the packaging laminate is exposed when the packaging laminate is reformed into packaging containers.

From the prior art packaging laminate, retortable packaging containers are produced such as packages of the type Tetra Recart®, with the aid of modern, rational packing and filling machines which both form, fill and seal packages. Flat-folded tubular blanks of the packaging laminate are raised into an open container carton which is sealed at its one end (the top end) by a fold-forming and sealing operation. The top-sealed container carton is filled through its open bottom end with the pertinent product, e.g. a food, and is finally given a bottom seal by means of a corresponding fold-forming and sealing operation, so as to obtain finished retortable packages.

In order to make for a product-safe storage of the packed food for shelf-lives of up to 12 months or longer, the filled packaging container is subjected to a shelf-life extending heat treatment with a view to destroying or eliminating any microorganisms present in the packaging container and in the packed product, respectively.

Such a shelf-life extending heat treatment is carried out either batchwise or continuously in a retort, or continuously in a heat treatment chamber provided with inlet and outlet, a so-called tunnel or pasteurizer, through which the packaging container is advanced at the same time as it is subjected to a heat treatment in response to a predetermined time-temperature scale. The expression "shelf-life extending heat treatment", as this is employed here and also in the following description encompasses both batchwise and continuous heat treatment in a retort as well as continuous heat treatment in a tunnel or pasteurizer.

A shelf-life extending heat treatment in a retort may be put into effect in a manner described in, for example, above mentioned WO 9816431. According to WO 9816431, the space in a retort provided with inlet and outlet for heating medium/cooling medium is filled with filled and thermosealed packaging containers. The retort is closed and a heating medium, e.g. hot steam, is injected into the retort against the outsides of the packaging containers in order to heat the packed product to a predetermined treatment temperature. The product is then held at this temperature for a predetermined treatment time during the continued injection of heating medium. After the treatment time at the relevant treatment temperature, the supply of heating medium is discontinued and is replaced by the supply of a cooling medium, e.g. cold water, for cooling the product, whereafter the packaging containers are removed from the retort through the outlet for further processing and handling.

Retortable packaging containers made from a packaging laminate of the type described by way of introduction employing an aluminium foil as gas barrier suffer from a serious drawback since they are not suitable for rapid and convenient heating in a microwave oven because of the aluminium foil, which effectively screens off the packed product from the microwaves of the oven.

There is thus a need in the art for a retortable packaging container of the type described by way of introduction which makes for a rapid and convenient heating of the packed product in a microwave oven, with the packed product still enclosed in its unopened packaging container.

### Objects of the invention

One object of the present invention is therefore to satisfy this need.

A further object of the present invention is to provide a packaging laminate for a flexible packaging container which, after filling and thermosealing, withstands a shelf-life extending heat treatment and which moreover may be heated together with its contents in a microwave oven without the need of first being opened.

Yet a further object of the present invention is to provide a simple, but efficient method of producing such a packaging laminate.

These and other objects and advantages will be attained according to the present invention by means of a packaging laminate with the characterising features as set forth in appended independent Claim 1, as well as a packaging container as claimed in independent Claim 7, respectively.

Preferred expedient embodiments of the packaging laminate and the method according to the present invention have further been given the characterising features as set forth in appended subclaims 2 to 6.

### Brief summary of the invention

According to one aspect, the present invention thus provides a packaging laminate for a retortable packaging container, the packaging laminate comprising a core layer which, on both sides, displays outer liquid-tight coatings of plastic and which, between the core layer and the one of the two outer liquid-tight plastic coatings, has at least one layer possessing tightness properties against gases, in particular oxygen gas, the layer being laminated to the core layer by a layer of polypropylene. The packaging laminate is characterised in that said at least one layer possessing tightness properties against gases, in particular oxygen gas, is a polymer film which has an outer coating, applied on both sides of the film, of a mixture of a water-soluble adhesion-promoting polymer component and a water-soluble barrier-increasing polymer component.

A number of attempts to replace the previously employed aluminium foil by a polymer film without other modifications or manipulations of the prior art packaging laminate have failed, since in practice it has proved difficult to bond, with requisite adhesive strength, the layer possessing gas barrier properties to the immediately neighbouring layers in the packaging laminate such as, for example, the lamination layer of polypropylene.

By means of practical trials forming the basis of the present invention, it has however surprisingly proved that the requisite bonding strength between the layer possessing gas barrier properties and neighbouring material layers may very simply and effectively be ensured with the aid of a coating of aqueous dispersion of a water-soluble adhesion-promoting polymer component and a water-soluble barrier-increasing polymer component.

The mixing ratio of the adhesion-promoting component and the barrier-increasing polymer component in the aqueous dispersion may, according to the present invention, be selected freely within broad limits, but is principally selected in view of the intended bonding strength. Thus, the proportion of the adhesion-promoting polymer component is selected to be high in relation to the proportion of the barrier-increasing polymer component if the requirement on the internal bonding strength and integrity of the packaging laminate is greater than corresponding requirements on barrier properties. Correspondingly, the proportion of the barrier-increasing polymer component is high compared with the proportion of the adhesion-promoting polymer if the requirement on the barrier properties of the packaging laminate is higher than corresponding requirements on bonding strength and integrity. The relevant mixing ratio of the two water-soluble polymer components may therefore readily be determined by a person skilled in the art in view of the desired barrier properties and integrity of the packaging laminate in each individual case.

The outer coating thus consists of a water-soluble adhesion-promoting polymer component of a modified polyethylene imine (PEI) and the water-soluble barrier-increasing polymer component is selected from the group comprising ethylene vinyl alcohol (EVOH) and polyvinyl alcohol (PVOH). A coating of these two preferred polymer components enjoys both environmental and process-engineering advantages, at the same time as it may efficiently cater for and ensure the desired integrity and barrier properties of the packaging laminate. For example, the coating is completely free of health- and environmentally hazardous solvents, unlike, for example, many other prior art polyurethane based adhesives, and in addition such a coating may be applied by means of a simple dispersion coating operation which requires no complicated or expensive process equipment but may readily and efficiently be put into practice by retro using existing simple process equipment.

The coating of the two water-soluble polymer components is, according to the present invention, disposed on on both sides of the gas barrier polymer film. The advantage of providing the coating on both sides of the gas barrier polymer film is that the barrier properties of the packaging laminate may thereby be improved, as a result of this double-sided coating.

The polymer film serving as gas barrier in the packaging laminate according to the present invention may be selected from the group essentially comprising polyester (PET), amorphous polyester (APET), polyamide (PA), amorphous polyamide (APA), liquid crystalline polymers (LCP), cyclic olefin copolymers (COC), ethylene vinyl alcohol (EVOH), polyvinyl alcohol (PVOH), as well as films of said polymers with a coating of inorganic material or of organic material. Examples of such coatings of inorganic material may be aluminium oxide (AlOx) and silicon oxide (SiOx), and examples of coatings of organic material may be a cross-linked polyacrylic acid (PAA).

Preferably, the layer serving as gas barrier in the packaging laminate according to the present invention is a polyester film (PET) which, on its one side, has an outer coating of a cross-linked polyacrylic acid (PAA). Such polymer films are commercially available under the trade name BESELA, such as, for example, BESELA ET-R which may be obtained from Kurheha Corporation. Commercial BESELA films possess excellent barrier properties against gases, in particular oxygen gas, and are moreover extremely heat-resistant (withstand heat treatment in a retort). They also possess excellent mechanical strength properties, for example a high extensibility and are in addition transparent to microwaves, unlike an aluminium foil which practically completely lacks extensibility and readily cracks on exposure to outer tensile stresses and, moreover, is not at all transparent to microwaves.

In one embodiment of a packaging laminate according to the present invention, the polyester film is preferably disposed with its outer coating of cross-linked polyacrylic acid turned to face towards the core layer of the packaging laminate. In this example, the coating of the packaging laminate of the water-soluble adhesion-promoting polymer component and the water-soluble barrier-increasing polymer component may be disposed on both sides of the polyester film, but is preferably disposed only on the side facing towards the core layer in direct contact with the lamination layer of the packaging laminate consisting of polypropylene in order to protect the coating against moisture and liquids and also to improve the bonding adhesion between the polyester film and the lamination layer.

The core layer of the packaging laminate is, a layer of paper or paperboard.

The outer, liquid-tight plastic coatings of the packaging laminate are preferably selected from the group which consists of heat-resistant thermoplastics in order to make for thermosealing of the packaging laminate and production of packaging containers which withstand a heat treatment at elevated temperature in a retort, without the coatings melting because of the elevated temperature. Examples of thermoplastics which may be employed in the packaging laminate according to the invention are high density polyethylene (HDPE), linear low density polyethylene (LLDPE), polypropylene (PP), oriented polypropylene (OPP), polyester (PET), oriented polyester (OPET) and amorphous polyester (APET).

The packaging material is provided by a method of producing a packaging laminate comprising a core layer which, on both sides, displays outer, liquid-tight coatings of plastic and which, between the core layer and one of the two outer liquid-tight plastic coatings, has a polymer film serving as gas barrier, which is laminated to the core layer by means of a lamination layer of polypropylene, and between the polymer film serving as a gas barrier, and the core layer, having a layer serving as a supplementary gas barrier, wherein the polymer film serving as a gas barrier is a film selected from the group comprising polyester (PET), amorphous polyester (APET), polyamide (PA), amorphous polyamide (APA), liquid crystalline polymers (LCP), cyclic olefin copolymers (COC), ethylene vinyl alcohol (EVOH), polyvinyl alcohol (PVOH), and films of said polymers with a coating of inorganic material or of organic material, according to which method the polymer film is laminated to a web of paper or paperboard by means of polypropylene which is extruded between the film and the web. The method is characterised in that at least that side of the film which is intended to be turned to face towards the paper or paperboard web is coated or covered with an aqueous dispersion of a water-soluble adhesion-promoting polymer component and a water-soluble barrier-increasing polymer component, and that the thus applied dispersion is dried before lamination to the paper or paperboard web.

The aqueous dispersion may be applied on the film in optional coating quantities, but is preferably applied in a sufficient quantity in order, after drying, to form a continuous thin coating layer throughout the entire width of the film. Typical coating quantities may vary from approx. 1 up to approx. 3 g/m², but is preferably approx. 1.6 g/m².

According to one preferred embodiment of the method according to the invention, the aqueous dispersion consists of a water-soluble adhesion-promoting polymer component of modified polyethylene imine and a water-soluble barrier-increasing polymer component selected from the group comprising ethylene vinyl alcohol (EVOH) and polyvinyl alcohol (PVOH).

The mixing ratio of the adhesion-promoting polymer component and the barrier-increasing polymer component in the aqueous dispersion may, according to the present invention, be selected freely within broad limits, but is principally selected in view of the intended bonding strength. Thus, the proportion of the adhesion-promoting polymer component is selected to be high in relation to the proportion of the barrier-increasing polymer component if the requirement on the internal bonding strength and integrity of the packaging laminate is greater than corresponding requirements on the barrier properties of the packaging laminate. Correspondingly, the proportion of the barrier-increasing polymer component is selected to be high in comparison with the proportion of the adhesion-promoting polymer, if the requirement on the barrier properties of the packaging laminate is higher than corresponding requirements on the internal adhesion and integrity of the packaging laminate. The relevant mixing ratio of the two water-soluble polymer components may therefore readily be determined by a person skilled in the art in view of the desired barrier properties and integrity of the packaging laminate in each individual case.

According to a further aspect of the present invention, there will be provided a packaging container produced from the packaging laminate for a food which, after filling, is intended to be subjected to a shelf-life extending heat treatment and which, after storage and still packed in the packaging container, may be heated without the need of first opening the packaging container.

Further details, characterising features and modifications of both the packaging laminate and the method of producing it will be described in greater detail hereinbelow with reference to the accompanying Drawings.

### Brief description of the accompanying Drawings

Fig. 1 is a schematic cross section of a prior art packaging laminate;
Fig. 2 is a schematic cross section of a packaging laminate according to a first embodiment of the present invention;
Fig. 3 is a schematic cross section of a packaging laminate according to a second embodiment of the present invention; and
Fig. 4 schematically illustrates a method of producing a retortable packaging laminate according to the present invention.

### Detailed description of the invention

While the present invention will be described with particular reference to the accompanying Drawings, it should be observed that the embodiments which are shown and described are merely intended to illustrate the invention without restricting it. It will be obvious to a person skilled in the art that many proximal modifications are possible with the guidance of the description and the accompanying Drawings without departing from the inventive concept as this is defined in the appended Claims.

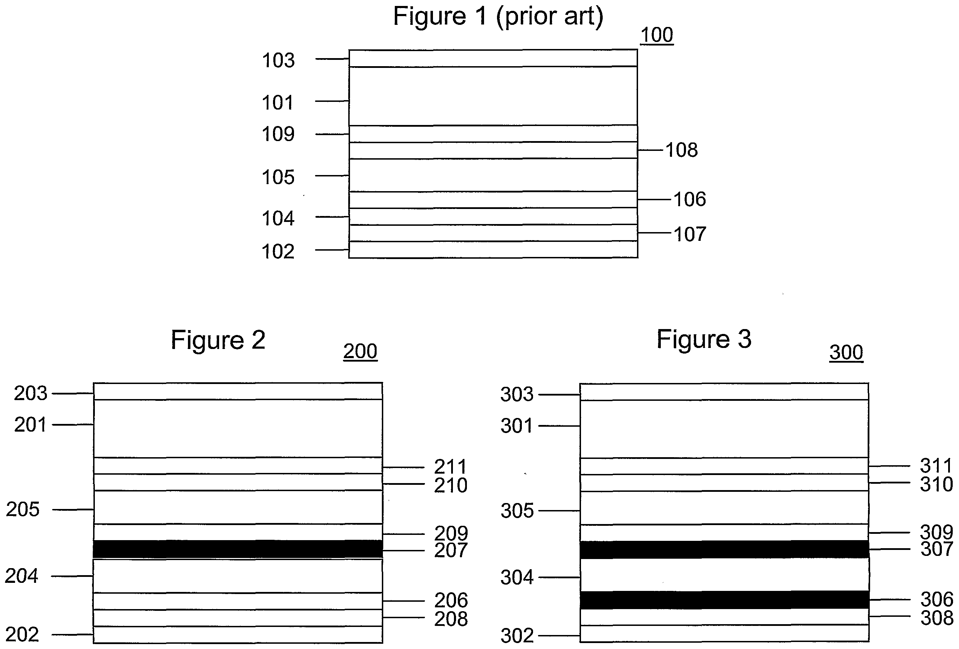

Fig. 1 thus schematically shows a cross section of a prior art packaging laminate 100 for a retortable packaging container. The packaging laminate 100 has a core layer 101 of paper or paperboard and outer, liquid-tight coatings 102 and 103 of plastic which are selected from among the group essentially comprising high density polyethylene (HDPE), linear low density polyethylene (LLDPE), polypropylene (PP), oriented polypropylene (OPP), polyester (PET), oriented polyester (OPET) and amorphous polyester (APET). The plastic is preferably a polypropylene (PP). The packaging laminate 100 further displays a layer 104 serving as gas barrier, normally an aluminium foil, and a layer 105 serving as supplementary gas barrier and consisting, e.g., of ethylene vinyl alcohol (EVOH) or polyamide (PA) between the core layer 101 and one of the two outer, liquid-tight plastic coatings 102. Both of the gas barrier layers 104 and 105 are bonded to one another by interjacent layers 106-109 of an adhesive, e.g. a PP based adhesive which may be obtained from Mitsui Chemicals under the trademark ADMER. Thus, the supplementary gas barrier 105 has surrounding adhesive layers or tie layers 106 and 107 by means of which superior adhesion will be ensured between the gas barrier layer 104 and the supplementary gas barrier layer 105 and between the gas barrier layer 104 and the outer, liquid-tight plastic coating 102, respectively. In addition, the supplementary gas barrier layer 105 has, on its side facing towards the core layer 101, an adhesive layer 108 which, with superior adhesion, bonds to the core layer 101 by the intermediary of an interjacent layer 109 of polypropylene (PP).

From prefabricated sheet-shaped blanks of the packaging laminate 100, retortable packaging containers are produced by fold forming and thermosealing in such a manner that the outer, liquid-tight plastic coating 102 of the packaging laminate 100 is turned to face inwards and form the inside in the packaging container in direct contact with the packed product.

One serious drawback inherent in packaging containers produced from the prior art packaging laminate in Fig. 1 is, as was mentioned previously, that they do not permit heating of the packed product in a microwave oven without the packaging container first needing to be opened.

This drawback is eliminated completely with a packaging laminate according to the present invention which is schematically illustrated in Fig. 2.

The packaging laminate 200 in Fig. 2 has a core layer 201 of paper or paperboard and outer, liquid-tight coatings 202 and 203 of a heat-resistant plastic which has been selected from the group essentially comprising high density polyethylene (HDPE), linear low density polyethylene (LLDPE), polypropylene (PP), oriented polypropylene (OPP), polyester (PET), oriented polyester (OPET) and amorphous polyester (APET). The plastic is preferably a polypropylene (PP). The packaging laminate 200 further displays a layer 204 serving as gas barrier and a layer 205 serving as supplementary gas barrier between the core layer 201 and one of the two outer, liquid-tight plastic coatings 202.

As was mentioned previously, the gas barrier polymer film 204 may be selected from the group essentially comprising polyester (PET), amorphous polyester (APET), polyamide (PA), amorphous polyamide (APA), liquid crystalline polymers (LCP), cyclic olefin copolymers (COC), ethylene vinyl alcohol (EVOH), polyvinyl alcohol (PVOH), as well as films of said polymers with a coating of inorganic material or of organic material. Examples of such coatings of inorganic material may be aluminium oxide (AlOx) and silicon oxide (SiOx), while examples of coatings of organic material may be a cross-linked polyacrylic acid (PAA).

Preferably, the gas barrier layer 204 is a polyester film (PET) which, on its one side, has an outer coating of a cross-linked polyacrylic acid (PAA). One usable polyester film with such outer coating may be obtained from Kurheha Corporation under the trade name BESELA, such as, for example, BESELA ET-R. This commercial polyester film enjoys excellent barrier properties against gases, in particular oxygen gas, and is moreover extremely heat resistant (withstands heat treatment in a retort). It also has excellent mechanical strength properties, e.g. high extensibility or stretch and is transparent for microwaves. While this is not illustrated in Fig. 2, it is assumed that the polyester film in this embodiment is disposed with its outer coating of cross-linked polyacrylic acid facing towards the core layer 201 of the packaging laminate 200.

The supplementary gas barrier layer 205 is an ethylene vinyl alcohol (EVOH) or a polyamide (PA).

In order to ensure superior adhesion and bonding between the two gas barrier layers 204 and 205 and between the gas barrier layer 204 and one of the two outer, liquid-tight plastic coatings 202 respectively, as well as between the supplementary gas barrier layer 205 and the core layer 201 of the packaging laminate 200, the gas barrier layer 204 displays, on that side which is turned to face towards the liquid-tight plastic coating 202, a coating or a primer 206 of a water-soluble modified polyethylene imine (PEI) and, on that side which is turned to face towards the supplementary gas barrier layer 205, a corresponding coating or primer 207 of a water-soluble adhesion-promoting polymer component and a water-soluble barrier-increasing polymer component. The adhesion-promoting polymer component is preferably a modified polyethylene imine (PEI) and the barrier-increasing polymer component is preferably a polyvinyl alcohol (PVOH).

Between the outer, liquid-tight plastic coating 202 and the coated gas barrier layer 204, the packaging laminate 200 has an additional layer 208 of an adhesive, preferably ADMER, and, between the coated gas barrier layer 204 and the supplementary gas barrier layer 205, the packaging laminate 200 similarly has a layer 209 of an adhesive, preferably ADMER. The superior internal adhesion between the supplementary gas barrier layer 205 of the packaging laminate 200 and the core layer 201 is provided for by a layer 210 of an adhesive, preferably ADMER which, by the intermediary of a lamination layer 211 of polypropylene, bonds the supplementary gas barrier layer 205 to the core layer 201.

Fig. 3 schematically illustrates a retortable packaging laminate according to a further embodiment of the present invention. The packaging laminate 300 has a core layer 301 of paper or paperboard and outer, liquid-tight coatings 302 and 303 of a heat resistant plastic. The plastic in both of the liquid-tight coatings 302 and 303 is selected from the group essentially comprising high density polyethylene (HDPE), linear low density polyethylene (LLDPE), polypropylene (PP), oriented polypropylene (OPP), polyester (PET), oriented polyester (OPET) and amorphous polyester (APET), preferably a polypropylene (PP). The packaging laminate 300 further has a layer 304 serving as gas barrier and a layer 305 serving as supplementary gas barrier between the core layer 301 and one of the two outer, liquid-tight plastic coatings 302.

As was mentioned earlier, the polymer film serving as a gas barrier 304 may be selected from the group essentially comprising polyester (PET), amorphous polyester (APET), polyamide (PA), amorphous polyamide (APA), liquid crystalline polymers (LCP), cyclic olefin copolymers (COC), ethylene vinyl alcohol (EVOH), polyvinyl alcohol (PVOH), as well as films of said polymers with a coating of inorganic material or of organic material. Examples of such coatings of inorganic material may be aluminium oxide (AlOx) and silicon oxide (SiOx), and examples of coatings of organic material may be a cross-linked polyacrylic acid (PAA).

Preferably, the polymer film serving as a gas barrier 304 is a polyester film (PET) which has an outer coating of a cross-linked polyacrylic acid (PAA). One usable polyester film with such outer coating may be obtained from Kurheha Corporation under the trade name BESELA, such as, for example, BESELA ET-R. This polyester film enjoys excellent barrier properties against gases, in particular oxygen gas, and is moreover extremely heat resistant (withstands heat treatment in a retort). It also displays excellent mechanical strength properties, e.g. high extensibility and is moreover transparent for microwaves. While this is not shown in Fig. 3, it is assumed that the polyester film in this embodiment is disposed with its outer coating of cross-linked polyacrylic acid facing towards the core layer 301 of the packaging laminate 300.

The supplementary gas barrier layer 305 is a polymer selected from the group consisting of ethylene vinyl alcohol (EVOH) and polyamide (PA).

In order to ensure superior adhesion between the two gas barrier layers 304 and 305 and between the gas barrier layer 304 and one of the outer liquid-tight plastic coatings 302, respectively, as well as between the supplementary gas barrier layer 305 and the core layer 301 of the packaging laminate 300, the gas barrier layer 304 has, on that side which is turned to face towards the liquid-tight plastic coating 302, a coating or a primer 306 of a water-soluble adhesion-promoting polymer component, preferably a modified polyethylene imine (PEI), and a water-soluble barrier-increasing polymer component, preferably a polyvinyl alcohol (PVOH), and on that side which is turned to face towards the supplementary gas barrier layer 305, a corresponding coating or primer 307 of a water-soluble, adhesion-promoting polymer component, preferably a modified polyethylene imine (PEI), and a water-soluble barrier-increasing polymer component, preferably a polyvinyl alcohol (PVOH).

Between the outer, liquid-tight plastic coating 302 and the coated gas barrier layer 304, the packaging laminate 300 has an additional layer 308 of an adhesive, preferably ADMER, and, between the coated gas barrier layer 304 and the supplementary gas barrier layer 305, the packaging laminate 300 has an additional layer 309 of an adhesive, preferably ADMER. The superior internal adhesion between the supplementary gas barrier layer 305 of the packaging laminate 300 and the core layer 301 is provided for by means of a layer 310 of an adhesive, preferably ADMER which, by the intermediary of a lamination layer 311 of polypropylene, bonds the supplementary gas barrier layer 305 to the core layer 301.

From prefabricated, sheet-shaped blanks of the packaging laminate 200 or 300 according to the invention, there are produced, as was mentioned previously, retortable packaging containers by fold forming and thermosealing in such a manner that the outer liquid-tight plastic coating 202 and 302 of the packaging laminate 200 and 300, respectively, are turned to face inwards and form the inside of the retortable packaging container in direct contact with the packed product. Such retortable packaging containers enjoy, as was mentioned previously, the advantage that the packed product may conveniently be heated and be prepared in a microwave oven, while still being packed in the unopened packaging container.

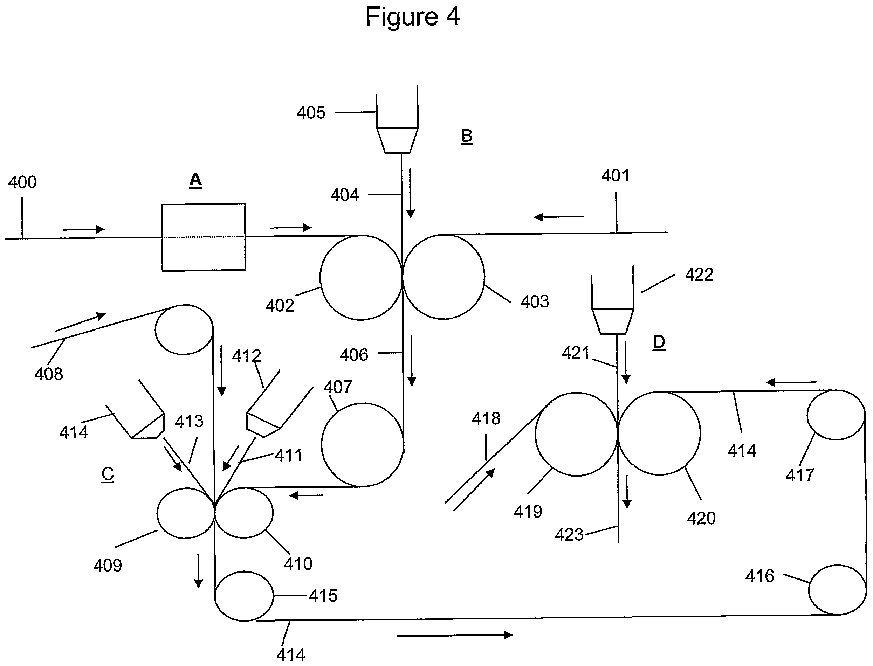

According to the invention, the packaging laminate 300 may be produced in the manner which is schematically illustrated in Fig. 4. A film 400 serving as gas barrier, e.g. a BESELA film from Kurheha Chemicals, is unwound from a magazine reel (not shown) and led to a first station (at A) where the film 400 is coated on both sides by a dispersion coating operation with an aqueous dispersion of a water-soluble adhesion-promoting polymer component, being a modified polyethylene imine (PEI), and a water-soluble barrier-increasing polymer component, which may be a polyvinyl alcohol (PVOH) which, after the application, is dried for the formation of a unitary, continuous coating on both sides of the film 400.

The proportions of each respective polymer component in the aqueous dispersion as well as the applied quantity of the aqueous dispersion may, as has already been mentioned, vary within optional limits depending upon the desired properties of the packaging laminate, such as integrity and barrier properties, but in general the applied quantity should be sufficient in order, after drying, to leave a coating quantity which lies within the range of between 1 and 3 g/m², such as, for example, approx. 1.6 g/m².

From the station A, the dried film 400 is led to a second station (at B) where the dried film 400 is laminated to a prefabricated film of a heat resistant thermoplastic, e.g. polypropylene (PP) which is unwound from a magazine reel (not shown) to the right in Fig. 4. Both of the films 400 and 401 are led together through the nip between two rotary rollers 402 and 403, at the same time as an adhesive 404, e.g. ADMER® is extruded between the films 400 and 401 by means of an extruder 405. It should be observed that, in the case where the film 400 serving as gas barrier is a BESELA film, it is advantageous if the polyacrylic acid coated (PAA) side of the film is located on that side which is turned to face away from the film 401.

From the lamination station B, the laminated films 406 are led via a bending roller 407 to an additional lamination station (at C) where the film 406 is laminated to a film 408 serving as supplementary gas barrier, e.g. ethylene vinyl alcohol (EVOH) or polyamide (PA). The film 406 is led, together with the film 408 (with the thermoplastic coated side of the film 406 facing away from the film 408) through the nip between two rotary rollers 409 and 410, at the same time as an adhesive 411, e.g. ADMER, is extruded between the film 406 and the film 408 through an extruder 412, and an adhesive 413, e.g. ADMER, is extruded on the other side of the film 408, i.e. that side which is turned to face away from the film 406, through an extruder 414.

By the intermediary of bending rollers 415-417, the laminated film 414 is led from the lamination station C to an additional lamination station (at D) where the laminated film 414 is laminated to a web 418 of paper or paperboard with the thermoplastic coated side of the film 414 turned to face away from the paper or paperboard web 418. The film 414 and the web 418 are led through the nip between two rotary rollers 419 and 420 at the same time as polypropylene (PP) 421 is extruded between the film and the web through an extruder 422.

After, or in connection with the lamination station at D, the uncoated paper or paperboard side of the packaging laminate 423 can, in per se known manner, be coated with a film of a thermoplastic, e.g. polypropylene (PP).

## Claims

1. A packaging laminate for a retortable packaging container, the packaging laminate (200; 300) comprising a core layer (201; 301) **consisting** of paper or paperboard, which, on both sides, has outer, liquid-tight coatings (202, 203; 302, 303) **consisting** of thermoplastic, and which, between the core layer (201; 301) and one of the two outer, liquid-tight plastic coatings (202; 302), has a polymer film (204; 304) serving as gas barrier which is laminated to the core layer (201; 301) by means of a layer (211; 311) of polypropylene, and between the polymer film **serving as a** gas barrier, and the core layer, having a **layer serving as a** supplementary gas barrier, wherein the polymer film **serving as a** gas barrier (204; 304) is a film selected from the group comprising polyester (PET), amorphous polyester (APET), polyamide (PA), amorphous polyamide (APA), liquid crystalline polymers (LCP), cyclic olefin copolymers (COC), ethylene vinyl alcohol (EVOH), polyvinyl alcohol (PVOH) and films of said polymers with a coating of inorganic or organic material, and wherein the polymer film **serving as a** gas barrier (204; 304) has at least one outer coating (206 and 207; 306 and 307) applied on both sides of the film, of a water-soluble adhesion-promoting polymer component and a water-soluble barrier-increasing polymer component, the water-soluble, adhesion-promoting polymer component being a modified polyethylene imine (PEI) and the water-soluble, barrier-increasing polymer component being selected from the group consisting of ethylene vinyl alcohol (EVOH) and polyvinylalcohol (PVOH), and wherein the supplementary gas barrier layer consists of a polymer **which has been** selected from **the group comprising** ethylene vinyl alcohol (EVOH) and polyamide (PA).

2. The packaging laminate as claimed in Claim 1, wherein the polymer film (204; 304) serving as gas barrier is a polyester film (PET) which, on its one side, has an outer coating of a cross-linked polyacrylic acid (PAA).

3. The packaging laminate as claimed in Claim 1 or 2, wherein the polyester film (204; 304) has the outer coating of cross-linked polyacrylic acid (PAA) facing towards the core layer (201; 301).

4. The packaging laminate as claimed in any one of Claims 1-3, wherein the supplementary gas barrier layer (205; 305) is surrounded on both sides by an adhesive layer (209, 210; 309, 310) by means of which the supplementary gas barrier layer (205; 305) is bonded to the gas barrier layer (204; 304) and the core layer (201; 301), respectively.

5. The packaging laminate as claimed in any one of Claims 1-4, wherein the outer coating (206 and 207; 306 and 307) is applied on the polymer film gas barrier (204; 304) in a sufficient amount in order, after drying, to form a continuous coating with a grammage of 1-3 g/ m², such as 1.6 g/m².

6. The packaging laminate as claimed in any one of Claims 1-5, wherein the thermoplastic of the outer, liquid-tight coatings (202, 203; 302, 303) is selected from the group essentially comprising high density polyethylene (HDPE), linear low density polyethylene (LLDPE), polypropylene (PP), oriented polypropylene (OPP), polyester (PET), oriented polyester (OPET) and amorphous polyester (APET).

7. A retortable packaging container for a food which is produced by fold forming and thermosealing of a packaging laminate as claimed in any of Claims 1 to 6.

## Patentansprüche

1. Verpackungslaminat für einen retortierbaren Verpackungsbehälter, wobei das Verpackungslaminat (200; 300) eine Kernschicht (201; 301) umfasst, die aus Papier oder Pappe besteht, das bzw. die auf beiden Seiten äußere flüssigkeitsdichte Beschichtungen (202, 203; 302, 303) aufweist, die aus einem Thermoplast bestehen, und das zwischen der Kernschicht (201; 301) und einer der äußeren flüssigkeitsdichten Kunststoffbeschichtungen (202; 302) einen Polymerfilm (204; 304) aufweist, der als Gasbarriere dient, die mittels einer Schicht (211; 311) aus Polypropylen auf die Kernschicht (201; 301) laminiert ist, und zwischen dem Polymerfilm, der als Gasbarriere dient, und der Kernschicht eine Schicht aufweist, die als ergänzende Gasbarriere dient, wobei der Polymerfilm, der als Gasbarriere (204; 304) dient, ein Film ist, der ausgewählt ist aus der Gruppe, die Polyester (PET), amorphes Polyester (APET), Polyamid (PA), amorphes Polyamid (APA), flüssigkristalline Polymere (LCP), zyklische Olefincopolymere (COC), Ethylenvinylalkohol (EVOH), Polyvinylalkohol (PVOH) und Filme der Polymere mit einer Beschichtung aus anorganischem oder organischem Material umfasst, und wobei auf den Polymerfilm, der als Gasbarriere (204; 304) dient, auf beiden Seiten des Films mindestens eine äußere Beschichtung (206 und 207; 306 und 307) aus einer wasserlöslichen, haftungsfördernden Polymerkomponente und einer wasserlöslichen, barriereverstärkenden Polymerkomponente aufgebracht ist, wobei die wasserlösliche, haftungsfördernde Polymerkomponente ein modifiziertes Polyethylenimin (PEI) ist und die wasserlösliche, barriereverstärkende Polymerkomponente ausgewählt ist aus der Gruppe, die aus Ethylenvinylalkohol (EVOH) und Polyvinylalkohol (PVOH) besteht, und wobei die ergänzende Gasbarriereschicht aus einem Polymer besteht, das aus einer Gruppe,, die Ethylenvinylalkohol (EVOH) und Polyamid (PA) umfasst, ausgewählt ist.

2. Verpackungslaminat nach Anspruch 1, wobei der Polymerfilm (204; 304), der als Gasbarriere dient, ein Polyesterfilm (PET) ist, der auf einer Seite eine äußere Beschichtung aus einer vernetzten Polyacrylsäure (PAA) aufweist.

3. Verpackungslaminat nach Anspruch 1 oder 2, wobei beim Polymerfilm (204; 304) die äußere Beschichtung aus einer vernetzten Polyacrylsäure (PAA) der Kernschicht (201; 301) zugewandt ist.

4. Verpackungslaminat nach einem der Ansprüche 1-3, wobei die ergänzende Gasbarriereschicht (205; 305) auf beiden Seiten von einer Haftschicht (209, 210; 309, 310) umgeben ist, mittels der die ergänzende Gasbarriereschicht (205; 305) auf die Gasbarriereschicht (204; 304) bzw. die Kernschicht (201; 301) gebondet ist.

5. Verpackungslaminat nach einem der Ansprüche 1-4, wobei die äußere Beschichtung (206 und 207; 306 und 307) nach dem Trocknen in einer ausreichenden Menge auf die Polymerfilmgasbarriere (204; 304) aufgebracht wird, um eine kontinuierliche Beschichtung mit einer Grammatur von 1-3 g/m², wie etwa 1,6 g/m² zu bilden.

6. Verpackungslaminat nach einem der Ansprüche 1-5, wobei der Thermoplast der äußeren flüssigkeitsdichten Beschichtungen (202, 203; 302, 303) ausgewählt ist aus der Gruppe, die im Wesentlichen Polyethylen hoher Dichte (HDPE), lineares Polyethylen niedriger Dichte (LLDPE), Polypropylen (PP), ausgerichtetes Polypropylen (OPP), Polyester (PET), ausgerichtetes Polyester (OPET) und amorphes Polyester (APET) umfasst.

7. Retortierbarer Verpackungsbehälter für ein Lebensmittel, der durch Faltung und Thermoversiegelung eines Verpackungslaminats nach einem der Ansprüche 1 bis 6 hergestellt wird.

## Revendications

1. Stratifié d'emballage destiné à un contenant d'emballage autoclavable, le stratifié d'emballage (200 ; 300) comprenant une couche centrale (201 ; 301) constituée de papier ou de carton, qui, sur les deux côtés, comporte des revêtements extérieurs, étanches aux liquides (202, 203 ; 302, 303), constitués d'un thermoplastique, et qui, entre la couche centrale (201 ; 301) et l'un des deux revêtements extérieurs en matière plastique, étanches aux liquides (202 ; 302), comporte un film de polymère (204 ; 304) servant de barrière aux gaz qui est assemblé par stratification avec la couche centrale (201 ; 301) au moyen d'une couche (211 ; 311) de polypropylène, et entre le film de polymère servant de barrière aux gaz et la couche centrale, comportant une couche servant de barrière aux gaz supplémentaire, le film de polymère servant de barrière aux gaz (204 ; 304) étant un film sélectionné dans le groupe constitué d'un polyester (PET), d'un polyester amorphe (APET), d'un polyamide (PA), d'un polyamide amorphe (APA), de polymères cristallins liquides (LCP), de copolymères d'oléfines cycliques (COC), de l'éthylène-alcool vinylique (EVOH), de l'alcool polyvinylique (PVOH), et de films desdits polymères avec un revêtement constitué d'un matériau inorganique ou organique, et dans lequel le film de polymère servant de barrière aux gaz (204 ; 304) comporte au moins un revêtement extérieur (206 et 207 ; 306 et 307) appliqué sur les deux côtés du film, formé d'un constituant polymère hydrosoluble augmentant l'adhérence et d'un constituant polymère hydrosoluble augmentant l'effet barrière, le constituant polymère hydrosoluble augmentant l'adhérence étant une polyéthylèneimine (PEI) modifiée et le constituant polymère hydrosoluble augmentant l'effet barrière étant sélectionné dans le groupe constitué de l'éthylène-alcool vinylique (EVOH) et de l'alcool polyvinylique (PVOH), et dans lequel la couche servant de barrière aux gaz supplémentaire se compose d'un polymère qui a été sélectionné dans le groupe comprenant l'éthylène-alcool vinylique (EVOH) et un polyamide (PA).

2. Stratifié d'emballage selon la revendication 1, dans lequel le film de polymère (204 ; 304) servant de barrière aux gaz est un film de polyester (PET) qui, sur un côté, comporte un revêtement extérieur constitué d'un acide polyacrylique réticulé (PAA).

3. Stratifié d'emballage selon la revendication 1 ou 2, dans lequel le film de polyester (204 ; 304) comporte le revêtement extérieur d'acide polyacrylique réticulé (PAA) orienté vers la couche centrale (201 ; 301).

4. Stratifié d'emballage selon l'une quelconque des revendications 1 à 3, dans lequel la couche barrière aux gaz supplémentaire (205 ; 305) est entourée sur les deux côtés d'une couche d'adhésif (209, 210 ; 309, 310) au moyen de laquelle la couche barrière aux gaz supplémentaire (205 ; 305) est collée sur la couche barrière aux gaz (204 ; 304) et la couche centrale (201 ; 301), respectivement.

5. Stratifié d'emballage selon l'une quelconque des revendications 1 à 4, dans lequel le revêtement extérieur (206 et 207 ; 306 et 307) est appliqué sur la barrière aux gaz constituée du film de polymère (204 ; 304) en quantité suffisante pour former, après séchage, un revêtement continu ayant un grammage de 1 à 3 g/m², par exemple de 1,6 g/m².

6. Stratifié d'emballage selon l'une quelconque des revendications 1 à 5, dans lequel le thermoplastique des revêtements extérieurs, étanches aux liquides (202, 203 ; 302, 303), est sélectionné dans le groupe comprenant essentiellement un polyéthylène de haute densité (HDPE), un polyéthylène de basse densité linéaire (LLDPE), un polypropylène (PP), un polypropylène orienté (OPP), un polyester (PET), un polyester orienté (OPET) et un polyester amorphe (APET).

7. Contenant d'emballage autoclavable destiné à un aliment, qui est produit par formation de plis et thermoscellage d'un stratifié d'emballage selon l'une quelconque des revendications 1 à 6.
